**Europäisches Patentamt**

**European Patent Office**

**Office européen des brevets**

(19)

(11) Publication number: **0 018 424**

A1

(12) # EUROPEAN PATENT APPLICATION

(21) Application number: **79101328.7**

(22) Date of filing: **02.05.79**

(51) Int. Cl.³: **G 01 K 13/00**
**G 01 K 11/16, G 02 F 1/13**

(43) Date of publication of application:
**12.11.80 Bulletin 80/23**

(84) Designated Contracting States:
**AT BE CH DE FR GB IT LU NL SE**

(71) Applicant: **Carice International Products, Limited**
**On Luen Building 7-11 Kimberley Street 9th Floor, Flat C**
**Tsimshatsui Kowloon(HK)**

(72) Inventor: **Luk, Mung Kuen Alias Catherine Luk**
**On Luen Building 7-11 Kimberley Street, 9th, C**
**Tsimshatsui Kowloon(HK)**

(74) Representative: **Brown, John David**
**FORRESTER & BOEHMERT Widenmayerstrasse 5/IV**
**D-8000 München 22(DE)**

(54) **A method of measuring human body temperature and a liquid crystal temperature indicator suitable for measuring human body temperature.**

(57) This invention relates to a method of measuring human body temperature utilizing a liquid crystal temperature indicator and to a liquid crystal temperature indicator suitable for measuring human body temperature. The temperature indicator comprises a generally planar member for retention against an outer surface of a body, the member comprising deposits of liquid crystals. The deposits are activatable within a predetermined temperature range to be measured and are arranged such that, at a temperature within the predetermined temperature range, at least one of the deposits emits and or reflects visible radiation so as to render visible at the surface of the body numerals indicating the temperature of the body which numerals were previously substantially not visible The member also includes a coating for protecting the deposits from moisture and/or humidity from the body and or from the atmosphere.

*Fig.1*

Croydon Printing Company Ltd.

A method of measuring human body temperature and a liquid crystal temperature indicator suitable for measuring human body temperature

THIS INVENTION relates to a method of measuring human body temperature and to a liquid crystal temperature indicator suitable for measuring human body temperature.

Heretofore, human body temperature has normally been measured using mercury and alcohol thermometers, for example by holding the thermometer under the tongue for a period of up to several minutes or rectally as in the case with children. Conventional clinical thermometers can be cumbersome to use and drawbacks can occur particularly when these thermometers are used to measure the temperature of, for example, infants, children, hospital patients who are asleep or unconscious and elderly persons. Besides inconvenience, conventional body mercury thermometers utilize a glass tube thereby creating the danger of possible breakage and injury from glass splinters and poisoning from the released mercury.

Moreover, despite general attitudes, the ordinary glass thermometer, as shown by medical studies, for example, Oral Thermometry, The Guthrie Bulletin, W.C. Beck, M.D. and B. St. Cyr. R.N., Vol.43, April, 1974, pp. 170-185, requires, on an average, 11 minutes to reach a reliable reading. Even then, such studies indicate that the accuracy of such readings on the standard commercial thermometer ranges from ± 0.2 to ± 2.6°F. (see pp. 175-176 of the Bulletin). The widespread use of only 3 minutes for taking a reading leads to greater inaccuracies.

An object of the present invention is to overcome or at least mitigate one or more of the above mentioned limitations inherent in the conventional clinical thermometer.

According to a first aspect of the present invention there is provided a method of measuring human body temperature, which method comprises utilising a liquid crystal temperature indicator to indicate the temperature of the body, which temperature indicator comprises a generally planar member suitable for retention against an outer surface of a body, the member comprising deposits of liquid crystals, which deposits are activatable within a predetermined temperature range to be measured and are arranged such that, at a temperature within the predetermined temperature range, at least one of the deposits emits and/or reflects visible radiation so as to render visible at the front of the member numerals indicating the temperature of the body, which numerals were previously substantially not visible, and including a coating for protecting the deposits from moisture and/or humidity from the body and/or from the atmosphere.

According to a second aspect of the present invention there is provided a liquid crystal temperature indicator suitable for measuring human body temperature, which temperature indicator comprises a generally planar member suitable for retention against a surface of a body, the member comprising deposits of liquid crystals, which deposits are activatable within a predetermined temperature range to be measured and are arranged such that, on temperature activation, the deposits emit and/or reflect visible radiation so as to render visible at the front of the member numerals indicating the temperature of the body, which numerals were previously substantially not visible, and including a coating for protecting the deposits from moisture and/or humidity from the body and/or from the atmosphere.

Whilst the principle involved appears simple, the practical aspects are far more complicated if accurate temperature readings are sought. Because the temperature of the outer surface of the body is being measured, care must be given to the relationship between a given body location's temperature and its susceptability to variability. Controlling variability is of some importance to external body thermometry if accuracy is sought to be achieved. Not only does external temperature affect the body's surface temperature, but the body's temperature is highly variable, even over small distances. Therefore, in the selection of the size and shape of the body thermometer, care should be given so as to minimize these variable factors and also optimize those zones that provide reliable readings.

It has now been found that small, concentrated areas, such as ovals, circles and rectangles, that stay roughly within 1.5 square inches in size achieve this optimizing for human thermometry. A preferred embodiment of the present invention includes this feature.

The temperature sensitive substance is normally a cholesteric liquid crystal compound that produces a visible colour change in response to temperature activation. The temperature sensitive substance emits and/or reflects visible radiation to indicate visibly the temperature. The colour sequence, in normal white light, being tan, red, green and blue and ultra-violet on temperature activation, the colour red normally being the first visible response of the liquid crystals when experiencing a temperature within its responsive range. The second response will be the colour green as the temperature reaches the mid-zone of the temperature responsive zone. The final colour response, that is a blue colour, is the reaction to the temperature going beyond the temperature responsive zone of a given liquid crystal. The blue colour has a tendency, however, to remain visible for some time after the temperature has exceeded the activation zone of the liquid crystal, thereby causing a visible reaction that may be misleading or confusing to those attempting to read the temperature indicator. A preferred embodiment of the present invention overcomes this difficulty by employing an optical filter, as more fully discussed hereinbelow, that visually blocks out the blue colour response of the liquid crystal. The liquid crystal is, preferably, selected so as to be responsive to a given temperature. As a result, it is possible to limit the visible reading to one numeral or symbol. Two numerals or symbols may appear at the front of the member, however, when the temperature of the body is between the temperatue indicated by the two numerals. Thus, if the numerals were 102 and 104 and a temperature indicating $103^{\circ}F$ ($39.5^{\circ}C$) were to be experienced by the body, both numerals 102 and 104 would be visible thereby indicating a reading of 103. If an optical filter is not in use to block the blue colour, it would be likely that three numerals would be visible at one time which may cause some confusion in the interpretation of the readout. The optical filter may be a yellow colour plastics film.

It has surprisingly been found that moisture and humidity can alter the response of the liquid crystals to temperature. This invention specifically includes a coating, such as a non-water based lacquer, preferably a clear lacquer for protecting the deposits from moisture and/or humidity from the human body and/or from the atmosphere. The provision of such a coating can obviate, or at least mitigate, the detrimental effect moisture and/or humidity can have on the colour intensity of the liquid crystals and can prolong the life of the indicator. In a preferred embodiment, the coating is applied so as to protect the deposits from humidity from the atmosphere.

Advantageously, the member comprises a non-transparent sheet of plastics material having transparent portions in the form of numerals, the liquid crystal deposits being selectively situated behind said numerals. In such an embodiment, a separate optical or colour filter is, preferably, situated between each deposit and the respective transparent portions of the plastics material sheet. Alternately, the sheet of plastics material could be adapted to act also as a filter.

Conveniently, the sheet of transparent material that is made opaque on one side thereof, such as the back, except for the portions that are allowed to remain transparent. The sheet can be made opaque using the process of silk screen printing using a black base ink. Advantageously, the back of the sheet having the deposits thereon also has a coating to cover all the numerals, the coating preferably being applied by the process of silk screen printing using a black base.

In a preferred embodiment, there is at the front of the sheet, a transverse centre line dividing the sheet into two zones, one having the reference letter "N" and the other having the reference letter "F". The numerals rendered visible, in use, comprise the numerals such as 94, 96 and 98 corresponding to a normal temperature in the Fahrenheit scale (35, 36, 37 in the Celcius scale), situated in the "N" zone of the sheet and the numerals, such as 100, 102 and 104 corresponding to a fever temperature in the Fahrenheit scale (38, 39, 40 in the Celcius scale), situated in the "F" zone. The line and reference numerals may be applied to the sheet by the process of silk screen printing. Advantageously, the back of the sheet has adhesive thereon to enable the sheet to be attached readily to a surface of the body such as to the forehead, the sheet being covered by a release paper or the like.

A preferred embodiment of the present invention utilizes the correlation between skin temperature and the internal temperature, such as oral temperatures, of the body. For example, in this embodiment, the indicator can be such as to indicate not the actual skin temperature but the internal, such as oral, temperature corresponding to that actual skin temperature. One advantage of this embodiment is that most people are familiar with oral temperature readings. Studies of correlation between internal, such as oral, and skin temperature show that for an accurate reading on the forehead, the liquid crystals operate at 4.3°F below the normal temperature to indicate a normal temperature. In other words, external cooling at normal temperature lowers the external temperature by approximately 4.3°F. In a preferred embodiment, since for reasons of prudence it would be unadvisable to rely on this differential when a person has a fever, a differential of 2.3°F below the fever temperature is used for the response temperature of the liquid crystals on the forehead. Thus, for 100°F (38°C) temperature readings a liquid crystal responsive to 98°F (37°C) is used and for a 96°F (36°C) temperature reading a liquid crystal responsive to 94°F (35°C) is used. For normal temperatures a liquid crystal having a 90°F (32°C) centre is used often having a 5° spread for the normal temperature and for lower temperature a liquid crystal having a narrow band selection is used.

For a better understanding of the present invention and to show how the same may be put into effect, reference will now be made, by way of example, to the accompanying drawing, in which:-

Figure 1 shows an embodiment of a temperature indicator in accordance with the present invention and suitably applied to the forehead of a child, woman and elderly person and

Figure 2 shows a table of a series of the indicators of Figure 1 each indicating a different temperature reading.

Referring to the drawing, there is shown a temperature indicator in the form of an oval disc, black in appearance, having a back adapted to be affixed to the forehead of a person. As shown the disc is of small size in relation to the forehead of a person. Colour markings are visible at the front of the disc, namely a transverse centre line and the letters "N" and "F" positioned centrally above and below the line adjacent thereto indicating a normal zone and fever zone, respectively.

The oval disc comprises an oval thin transparent sheet of plastics material, such as a plastics filter film of transparent material, having reference numerals imprinted on one side, preferably the back thereof when situated in the finished disc, for example using the process of silk screen printing in black colour base ink. The letters and line are applied preferably to the back of the sheet, for example using the process of silk screen printing. The reference numerals are situated such that the numerals 94, 96, 98 are situated sequentially in a clockwise manner in the upper zone of the oval sheet above the transverse line, that is in the normal zone, and the reference numerals 104, 102 and 100 are situated sequentially in a clockwise manner in the lower zone of the sheet and below the transverse line, that is in the fever zone.

A deposit of cholesteric compound, commonly called liquid crystals, is situated behind each reference numeral, each deposit responding at a different temperature within the range of 94°F and 104°F (35 and 40°C) internal body temperature. Variations in colour of the deposits are achieved according to the temperature response of the liquid crystals as previously described.

An optical filter, such as a circular yellow colour plastics filter film, is situated between each deposit and the sheet to filter the colour tone of blue and ultra-violet thereby avoiding the continuous display of a blue reading, as earlier discussed. The optical filter may also make the colours tan and red more tangible and the colour green more vivid. A dark coating is applied at the back of the sheet to cover all the numerals thereby enhancing the readability of the indicator.

An adhesive can be applied to the back of the disc to enable the disc to be attached to the forehead of a person. If an adhesive is applied, it should comply with safety and hygenic requirements acceptable for medical use. For convenience, a release paper covers the adhesive.

Advantageously, the dark coating is simply a black base applied to the sheet after application of the deposits and filters thereto for example using a process of silk screen printing. The treatment preferably commences with a silk screen printing of the numerals and markings on the sheet followed by the application of the deposits and filter to the sheet. The further silk screen printing is then applied to cover all the numerals and finally the adhesive is applied. As is apparent, the disc can be die-stamped from sheet and then treated as described above or, preferably the sheet can be treated as hereabove and, after treatment, oval shapes die-cut therefrom.

At normal room temperature, the liquid crystals do not respond to give a colour change and therefore, no reference numerals are normally visible at the front of the disc. On use of the indicator the release paper is present, is removed from the back of the disc and the temperature indicator is applied <u>via</u> the back thereof for example, to the forehead, in the area where the right and left superior orbital artery traverses the eyebrow. As a factor in the reliability of the temperature reading, location and size of the indicator is of some importance, the location above the right and left superior orbital artery, as an illustration, provides a relatively reliable measure.

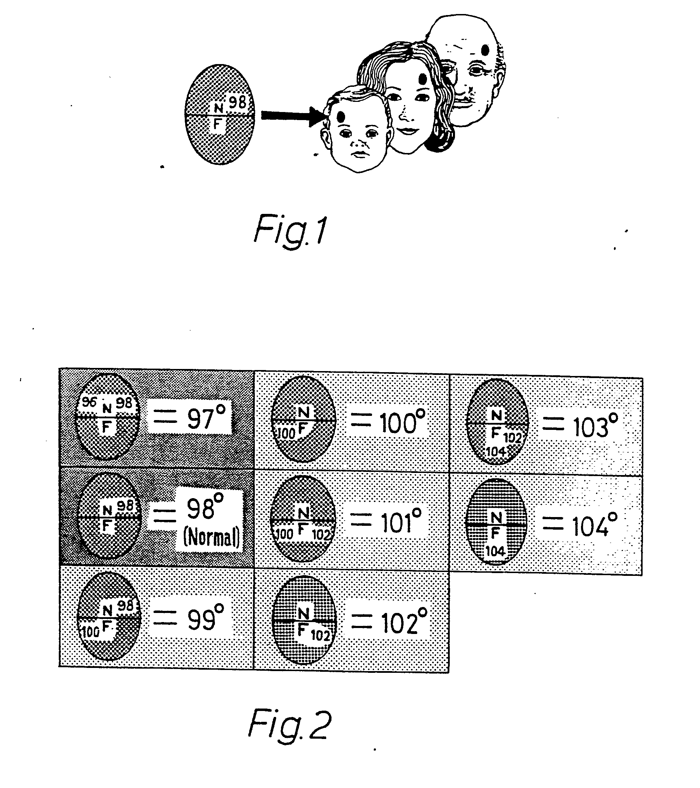

After a few seconds, the temperature indicator will begin to display the temperature corresponding for example to the internal body temperature. Normally, only one of the numerals is activated. If, however, the temperature corresponds to a temperature between two of the numerals, two numerals activate, the lower numeral normally being of a colour in the lower, green, region of the colour sequence and the higher numeral being of a colour at the higher, reddish, region of the colour sequence (See Figure 2).

The temperature indicator can be readily attached to the forehead of a person or a child and can give relatively accurate, continuous reading in a matter of seconds.

Because of the positioning of the temperature readings 94 to 98 in the "N", that is normal, zone and the temperature readings 100 to 104 in the "F", that is the fever, zone, the degree of the temperature that is normal or fever can be readily seen. If required, different reference numerals can be chosed or different scale, for example Centigrade can be used.

As is the case when measuring body temperature, care should be taken when using this embodiment temperature indicator. Advantageously, the person should be in a restful condition and the forehead should be dry because a forehead wet through perspiration or otherwise may result in the indicator reading a lower temperature than the actual body temperature. Drafts and strong light or heat should be avoided during a reading such as direct sunlight or being too close to stoves heaters and air conditioners. Advantageously, the ambient temperature should be from $60^{\circ}F$ to $85^{\circ}F$ (15 to $29^{\circ}C$) when using the temperature indicator. However, if the ambient temperature is below $60^{\circ}F$ ($15^{\circ}C$), $1^{\circ}F$ should be added to the reading and if the ambient temperature is above $85^{\circ}F$ ($29^{\circ}C$), $1^{\circ}F$ should be substracted from the reading. The indicator can be reused and, if the adhesive backing should lose its effectiveness in time, the disc can readily be attached to the forehead by applying cellophane tape or adhesive tape to the front of the disc and to the forehead.

For ease of use and protection the temperature indicator is preferably kept in a plastics material case having an oval insert or oval shaped flange to retain the thermometer in position.

This embodiment indicator is, therefore, easy to use, quick, safe, reliable, convenient and unbreakable. This embodiment indicator is substantially easier to read than the conventional body thermometer. In addition, the indicator is unbreakable in the traditional sense of glass thermometers. Moreover, by providing a continuous reading, the indicator enables the user to monitor hospital patients, invalids and children without repeated disturbance. And most importantly, the indicator provides a reliable temperature reading in seconds, whereas the conventional thermometer requires many minutes.

A preferred embodiment of the temperature indicator consists of an oval disc comprising an inert plastics substrate coated with cholestric liquid mixture and laminated with inert black backing and hypo-alergical medical grade adhesive. The oval disc is preferable 2.54 cm in length, 1.94 cm in width and 0.051 cm thick and measures body temperature in $1^{o}C$ increments. When affixed to the body surface the indicator is affixed, in use, to the supra orbital region of the forehead and indicates a digital reading of the temperature. If the temperature lies between digits, two numerals appear at the same time. Alternatively, the disc can be oval for example 1 inch in length and $\frac{3}{4}$ inch wide, that is having a surface area of 1.75 square inches.

Digits can be selected as desired. Preferred selection is $94^{o}F$, $96^{o}F$, $98^{o}F$, $102^{o}F$, $104^{o}F$, or $37^{o}C$, $39^{o}C$, $40^{o}C$, $41^{o}C$, $43^{o}C$, although if required the $94^{o}F$ or $37^{o}C$ reading can be omitted.

In all the embodiments hereinbefore described, the indicator includes a coating of a non-water based clear lacquer to block any air holes for protecting the deposits from humidity from the atmosphere. If required the coating can also be applied so as to protect the deposits from moisture, such as perspiration, from the human body.

CLAIMS

1.  A method of measuring human body temperature, which method comprises utilising a liquid crystal temperature indicator to indicate the temperature of the body, which temperature indicator comprises a generally planar member suitable for retention against an outer surface of a body, the member comprising deposits of liquid crystals, which deposits are activatable within a predetermined temperature range to be measured and are arranged such that, at a temperature within the predetermined temperature range, at least one of the deposits emits and/or reflects visible radiation so as to render visible at the front of the member numerals indicating the temperature of the body, which numerals were previously substantially not visible, and including a coating for protecting the deposits from moisture and/or humidity from the body and/or from the atmosphere.

2.  A liquid crystal temperature indicator suitable for measuring human body temperature, which temperature indicator comprises a generally planar member suitable for retention against a surface of a body, the member comprising deposits of liquid crystals, which deposits are activatable within a predetermined temperature range to be measured and are arranged such that, on temperature activation, the deposits emit and/or reflect visible radiation so as to render visible at the front of the member numerals indicating the temperature of the body, which numerals were previously substantially not visible, and including a coating for protecting the deposits from moisture and/or humidity from the body and/or from the atmosphere.

3.  An indicator according to Claim 2, wherein the coating is applied so as to protect the deposits from humidity from the atmosphere and comprises a non-water based lacquer.·

4.   An indicator according to Claim 2 or 3, wherein the numerals indicate the oral temperature of the body.

5.   An indicator according to Claim 2, 3 or 4, wherein the member is about 1.5 square inches or less in area.

6.   An indicator according to any one of Claims 2 to 5, which comprises an optical filter for reducing or blocking out the blue colour response of the liquid crystals.

7.   An indicator according to any one of Claims 2 to 6, wherein the member comprises a sheet having transparent and non-transparent portions, the transparent portions being in the form of the numerals and the deposits being situated behind the respective transparent portions.

8.   An indicator according to Claim 7 when appended to Claim 6, wherein an optical filter is situated between each deposit and the respective transparent portion of the sheet.

9.   An indicator according to Claim 7 when appended to Claim 6, wherein the sheet is adapted to act as the optical filter.

10.   An indicator according to Claim 7, 8 or 9, wherein the front of the sheet is divided into two zones, one indicating, in use, normal body temperature and the other indicating, in use, fever body temperatures, and wherein the numerals rendered visible, in use, include the numerals 35, 36 and 37 in the Celcius scale, situated in the normal zone and the numerals 38, 39 and 40 in the Celcius scale, situated in the fever zone (or their Fahrenheit counterparts).

Fig.1

Fig.2

0018424

### European Patent Office

## EUROPEAN SEARCH REPORT

Application number

EP 79 10 1328

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | US - A - 4 030 482 (J.M.A.R. NAVATO)<br>* Heading, column 2, line 36 - column 5, line 4; figures 1-5 * | 1-10 | G 01 K 13/00<br> 11/16<br>G 02 F 1/13 |
| | -- | | |
| | FR - A - 2 389 308 (LABORATORIO FARMACOLOGICO MILANESE)<br>* Heading; page 3, line 17 - page 4, line 27; figures 1,2 * | 1-4,7 | |
| | -- | | **TECHNICAL FIELDS SEARCHED (Int.Cl. 3)** |
| | US - A - 4 070 912 (TH.J. McNAUGHTAN)<br>* Heading; column 4, line 3 - column 6, line 36; figures 1,2, 3,4a,4b,5,6 * | 1-4 | G 01 K 11/16<br> 11/18<br> 13/00 |
| | -- | | |
| | FR - A - 2 254 621 (ROBERT PARKER RESEARCH INC.)<br>* Heading; page 3, lines 5-38; page 10, line 27 - page 12, line 24; figures 1,2 * | 1-5 | |
| | -- | | |
| | AU - A - 469 146 (JOHNSON & JOHNSON)<br>*. Heading; figures 1-5; page 11, paragraph 2 - page 16, paragraph 3 * | 1-4,6-10 | **CATEGORY OF CITED DOCUMENTS**<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | -- | | |
| | CH - A - 598 584 (A. MICHEL S.A.)<br>* Heading; column 2, line 53 - column 5, line 44; figures 1-5 * | 1-4,7, 8,10 | |
| | ---- | | &: member of the same patent family, corresponding document |

The present search report has been drawn up for all claims

| Place of search | Date of completion of the search | Examiner |
|---|---|---|
| The Hague | 12-12-1979 | VISSER |

EPO Form 1503.1  06.78